# EUROPEAN PATENT SPECIFICATION

(11) **EP 3 000 215 B1**
(45) Date of publication and mention of the grant of the patent: **14.02.2018**
(21) Application number: 14734604.3
(22) Date of filing: 21.05.2014
(51) Int. Cl.: H04L 29/06, H04L 29/08

(54) **LIVE MEDIA PROCESSING AND STREAMING SERVICE**
LIVE-MEDIENVERARBEITUNGS- UND STREAMING-DIENST
SERVICE DE TRAITEMENT MULTIMÉDIA EN DIRECT ET DE TRANSMISSION EN CONTINU

(30) Priority: 22.05.2013 US 201313900517
(43) Date of publication of application: 30.03.2016
(73) Proprietor: Microsoft Technology Licensing, LLC, Redmond, WA 98052 (US)
(72) Inventor: BOMFIM, Rodrigo Maialle, Redmond, Washington 98052-6399 (US); HEGDE, Rajesh, Redmond, Washington 98052-6399 (US); GOULET, Steven, Redmond, Washington 98052-6399 (US); DUGGARAJU, Prakash, Redmond, Washington 98052-6399 (US); SHAPOROV, Ivan, Redmond, Washington 98052-6399 (US); SUESS, Jason, Redmond, Washington 98052-6399 (US)
(74) Representative: Grünecker Patent- und Rechtsanwälte PartG mbB
(86) International application number: PCT/US2014/038869
(87) International publication number: WO 2014/189989

(56) References cited:
- WO-A1-2012/152817
- US-A- 5 983 005
- US-A1- 2003 120 793
- US-A1- 2009 028 188
- US-A1- 2012 265 892

## Description

### BACKGROUND

Advances in the production of digital media have increased the consumers' demand for rich and varied media viewing experiences. Various media distribution services are available that distribute digital media to consumers for playback on various types of electronic devices. Streaming is a popular distribution method that transmits media continuously to a consumer while the media is being played back. The digital media is often streamed through a network, such as the Internet, from the media distribution service to the consumer's electronic device. The streamed media may be stored and streamed when requested (i.e., on demand) or may be a live event that is streamed in real time.

The Internet is a major vehicle for streaming digital media. At any given time, consumers using the Internet can view a live event streamed from a broadcast source from anywhere in the world. Typically, a consumer makes a request to have the digital media streamed from a service employing a dedicated set of servers to store and distribute the digital media on behalf of the service. The continuous transmission of a live stream from a server places a significant demand on the server's bandwidth and resources. In order to provide a seamless presentation of the live event, the service relies on adequate resources from the server and the network to stream the live event continuously. If such resources are not operational or available, transmission of the live event may be delayed causing a poor viewing experience for the end user.
US 2003/120793 A1 discloses a method and an arrangement for sending continuous data over a network to subscriber's terminals. A common web server may send consecutive video files to the subscriber's terminals directly, or via a proxy. The subscriber's terminal may send a request for the desired video to the web server or the proxy, and in response may receive an index file containing the information of the current video file. When the subscriber's terminal knows the current video file, it requests the web browser to send it. US 5,983,005 discloses a scalable architecture for delivery of real-time information over a communications network, wherein the routing of a stream of packets through a network may be controlled in response to selection signals received from users. The size of the packets being transmitted is variable and can change on a packet by packet basis, for example, when using a variable bit rate compression algorithm, wherein the packet size will vary so as to establish approximately the same amount of time for each sample.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

A live media processing and streaming service provides a content provider with media processing and distribution capabilities for live events. A content provider of a live event subscribes to the service to utilize the service's functions to capture, process, and distribute the live event to media consumers worldwide in a manner specified by the content provider.

The service provides capabilities for capturing a live event, configuring programs from the live event, formatting the programs into a format suitable for streaming, storage of the presentation manifest and fragments corresponding to a program into a cloud storage, and distribution of the presentation manifest and fragments to media consumers in real time.

The content provider interacts with the service to set up the channels and delivery services needed to capture, process and deliver one or more programs of a live event in real time. The channel provides media processing services, such as encoding, packaging, and transcoding a live stream feed into a set of multiple bit rate streams. The channel extracts the programs from the live stream feed, converts them into a presentation manifest and fragments, and stores them in cloud storage. The delivery service services requests for the presentation fragments and manifest from end user playback devices. The delivery service obtains the presentation fragments and manifest in real time from cloud storage.

These and other features and advantages will be apparent from a reading of the following detailed description and a review of the associated drawings. It is to be understood that both the foregoing general description and the following detailed description are explanatory only and are not restrictive of aspects as claimed.

### BRIEF DESCRIPTION OF THE DRAWINGS

Fig. 1 is a block diagram illustrating an exemplary system for processing and distributing live stream feeds.
Fig. 2 is a block diagram illustrating an exemplary data center.
Fig. 3 is a block diagram illustrating an exemplary configuration of a content provider's service.
Fig. 4 is a block diagram illustrating an exemplary configuration of a channel sink and delivery service.
Fig. 5 is a block diagram illustrating the storage of the fragments and manifests in the live streaming service.
Fig. 6A is a first exemplary illustration depicting the processing of multiple programs within the live streaming service.
Fig. 6B is a second exemplary illustration depicting the processing of multiple programs within the live streaming service.
Fig. 7 is a flow diagram illustrating an exemplary method of the live streaming service.
Fig. 8 is a flow diagram illustrating an exemplary method for streaming a presentation manifest and fragments in response to a request.
Fig. 9 is a flow diagram illustrating an exemplary method for processing a live stream feed.
Fig. 10 is a block diagram of an exemplary operating environment.
Fig. 11 is a block diagram of an exemplary computing device.

### DETAILED DESCRIPTION

Various embodiments described herein pertain to a live streaming service that provides real time media processing and distribution services. The service provides capabilities that can be utilized by a content provider to construct an infrastructure to process a live event. The infrastructure processes a live event into programs in real time which are then streamed to a media consumer for live and on-demand viewing.

A content provider subscribes to the service to configure an infrastructure suitable for a live event. The infrastructure may include at least one channel and at least one delivery service for each live event. The channel captures the live stream feed and processes it in accordance with the configuration set up by the content provider. The configuration may indicate specific encodings and quality levels, or bit rates, to be applied to the live stream feed. The configuration also specifies the manner in which one or more programs are generated from the live event. A program is a portion of the live event that is published as a separate presentation. A program may be associated with specific viewing characteristics, such as encoding settings, bit rates, and so forth.

The channel formats each program into a digital representation suitable for streaming to a media consumer's playback device. A program may be formatted into a presentation manifest and fragments. A fragment represents a few seconds of the program and the presentation manifest contains data pertaining to each fragment of the program up to the current time or up to the digital video recording (DVR) window length. The presentation manifest and fragments are stored in cloud storage.

The infrastructure also provides a delivery service that streams the presentation manifest and fragments to a media consumer's playback device. The playback device requests the presentation manifest and fragments from the delivery service. The delivery service obtains the presentation manifest and fragments from either cloud storage or from the channel if not present in cloud storage.

In one or more embodiments, the smooth streaming protocol is used to stream a program as a sequence of fragments. The fragments contain about two seconds of video which is small enough to store in a cache. The use of cacheable-sized fragments is beneficial in transmissions using the Internet since the transmissions result in less delay and fewer resources being expended. The Internet is based on a large infrastructure of routers and servers that are effective at caching data for HTTP. Servers are more effective at transmitting cacheable data which can be transmitted faster thereby increasing the number of live events that can be viewed concurrently.

In order to ensure that the live stream service is fault tolerant, one or more data centers are configured to receive and process a live stream feed concurrently so that there is no single point of failure in the streaming service. In addition, the fragments are stored in cloud storage, separate from the channel that generates them. In this manner, if there is a failure to a component of a channel, another channel can take over processing the live stream.

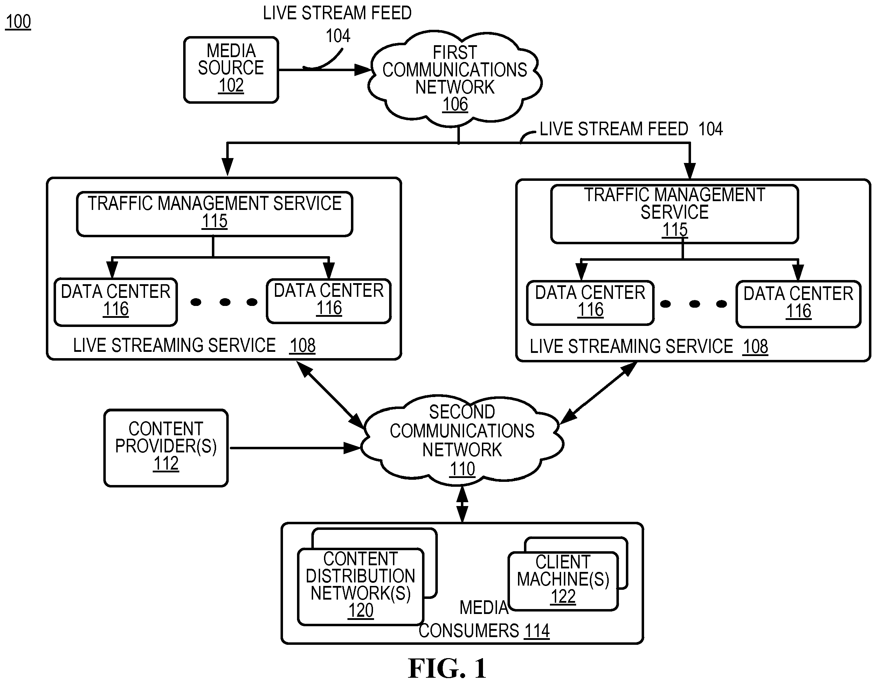

Attention now turns to a discussion of a system in which embodiments may be implemented. Fig. 1 illustrates a system 100 having one or more media sources 102 of a live stream feed 104 coupled through a first communications network 106 to one or more live streaming services 108. The live streaming services 108 are coupled through a second communications network 110 to content providers 112 and media consumers 114.

A live streaming service 108 may be configured with a traffic management service 115 and one or more data centers 116. The traffic management service 115 receives the live stream feeds 104 from a media source 102 and distributes the feeds 104 to the data centers according to the data center's availability, proximity or other traffic management rules.

A data center 116 is a computing center that provides the computing resources needed to support the media processing and streaming. A data center 116 may be located anywhere worldwide. In some embodiments, the data centers 116 for a particular live streaming service 108 may be located in different geographic locations, in a single geographic location, in the same building in a same location, or any combination thereof. The embodiments are not limited in this manner.

A live stream feed 104 (i.e., audio/visual) may come from any media source that captures a live event, such as, without limitation, a satellite, broadcast or cable network, content provider, electronic device, and so forth. The live stream feed 104 may be composed of any type of media, such as, audio, video, text, graphics, and any combination thereof. The live stream feed 104 may be transmitted to a live streaming service 108 through a first communications network 106. The first communications network 106 may be any type of communications medium, such as, one or more local area networks, wide area networks, directional connections, virtual connections, buses, private networks, virtual private networks, some combination of the above, and the like.

A content provider 112 may be a customer of the live streaming service 108 that utilizes the live streaming service 108 to process and distribute the content provider's live stream feeds. The content provider 112 may utilize the live streaming service 108 to distribute the content provider's live stream feeds to media consumers 114 associated with the content provider 112. The media customers 114 may include one or more content distribution networks (CDN) 120 and one or more client machines 122 associated with end users of the content providers 112. A content distribution network 120 may further distribute the live stream feed to end users of the CDNs 120.

The content providers 112 and media consumers 114 communicate with the live streaming service 108 through a second communications network 110. The second communications network 110 may be any type of network operating in accordance with the hypertext transfer protocol (HTTP) protocol. The second communications network 110 may include one or more local area networks, wide area networks, direction connections, virtual connections, private networks, virtual private networks, some combination of the above, and the like. In one or more embodiments, the second communications network 110 is the Internet. However, it should be understood that the embodiments are not limited to a HTTP-based network.

The live streaming service 108 may stream the live stream feed to the media consumers through an adaptive streaming protocol. An adaptive streaming protocol detects the bandwidth of the customers' network connection and central processing unit (CPU) capacity in real time and adjusts the bit rate or quality level of the live stream accordingly. In one or more embodiments, the live streaming service utilizes the Microsoft® Smooth Streaming protocol. However, it should be noted that the embodiments are not limited to Smooth Streaming and that other streaming protocols may be used, such as without limitation, Apple's HTTP Live Streaming (HLS), Adobe's Real Time Messaging Protocol (RTMP), MPEG DASH, and so forth.

Smooth Streaming uses fragments formatted in accordance with the fragmented MP4 format (fMP4) based on Part 12 of the MPEG-4 standard which defines ISO Base Media File Format. The fragmented MP4 format is also referred to as Protected Interoperable File Format (PIFF). In the Smooth Streaming protocol, a live stream is encoded at various bit rates and each bit rate stream is segmented into cacheable-sized fragments that are streamed. The fragments may contain approximately two seconds of a video presentation. By streaming a set of bit rate streams, the content provider is able to provide a consumer with a quality viewing experience where the playback device of the media consumer can select the media fragments of a quality level that suits the capabilities of the computing resources in their respective environment.

Although the system 100 as shown in Fig. 1 has a limited number of elements in a certain topology, it may be appreciated that the system 100 may include more or less elements in alternate topologies as desired for a given implementation.

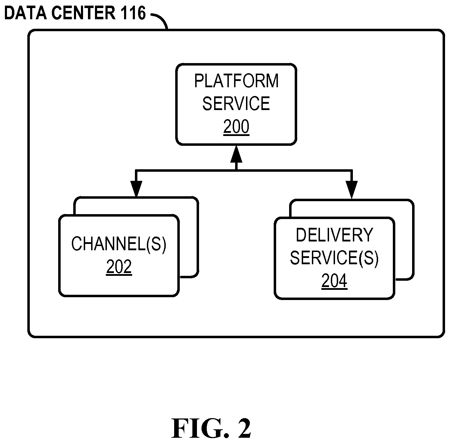

Fig. 2 illustrates the components of an exemplary data center 116. A data center 116 provides a comprehensive set of computing resources, hardware and software, for processing media and live streaming. The data center 116 may include a platform service 200 having multiple channels 202 and delivery services 204. Each channel 202 provides the computing resources needed to process a single live stream feed at a given point in time. Each delivery service 204 responds to fragment requests from the media consumers 114. The platform service 200 receives configuration requests from a content provider 112 with regard to the number of channels 202 and delivery services 204 needed for a presentation and allocates them accordingly.

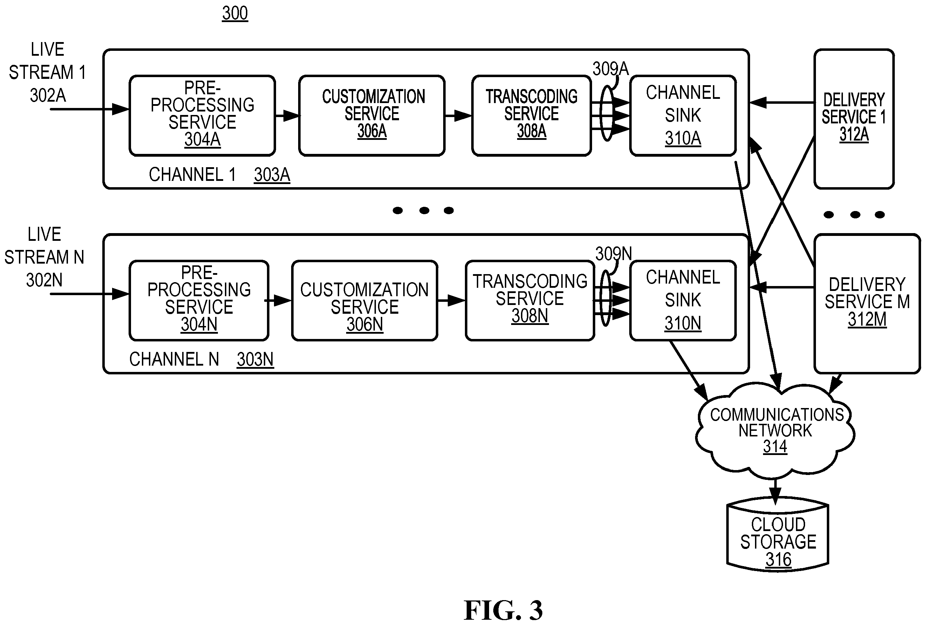

Fig. 3 illustrates the components of an exemplary configuration of a content provider's service 300. A content provider interacts with the platform service specifying a number of channels and delivery services, and information pertaining to the timing of the live events. As shown in Fig. 3, there are N number of channels and M number of delivery services. Each channel 303 and delivery service 312 is coupled to cloud storage 316 through a communications network 314. In one or more embodiments, the cloud storage 316 may be the Microsoft® Windows Azure Blob Storage. The Windows Azure Blob storage stores binary data or blobs in containers. A blob is accessible through a URL and is replicated across multiple computers in a data center and across multiple data centers in order to ensure fault tolerance.

A content provider's service may be composed of one or more channels 303A - 303N (collectively, "303") and one or more delivery services 312A - 312M (collectively, "312"). Each channel 303 receives a separate live stream 302A - 302N (collectively, "302"). Each channel 303 may include a pre-processing service 304A - 304N (collectively, "304"), a customization service 306A-306N (collectively, "306"), a transcoding service 308A-308N (collectively, "308"), and a channel sink 310A-310N (collectively, "310"). The pre-processing service 304 may include one or more encoders and/or packagers. The customization service 306 may include specialized types of media processing technologies requested by a content provider, such as watermarks. The transcoding service 308 transcodes the live stream feed into multiple bit rates streams 309 which are input into a channel sink 310. The channel sink 310 processes the multiple bit rate streams 309 into programs that are formatted into fragments and stored in cloud storage 316.

The live stream 302 is the raw uncompressed video/audio bits of data. An encoder compresses the source data into a compressed format in order to reduce the bandwidth needed to transmit the digital video. A decoder decompresses the compressed data upon receiving it so that it can be played back. A codec is a device or software application that can both compress and decompress a digital video file. There are various codec standards that define a particular compression format, such as without limitation, MPEG-1, MPEG-2, MPEG-4, H.264, VC-1, and so forth. The choice of codec may depend on a number of factors, such as the quality requirements for the video, the bitrate, the available bandwidth, and so forth.

A packager or container encapsulates a number of compressed video frames into a transport packet in accordance with a specified transport protocol for transmission across a communication network. There are various packaging standards and each indicates the specifications and format of the transport protocol. Examples of such transport protocols include MPEG 2 Transport Stream (TS), Real Transport Protocol (RTP), and so forth.

A customization service 306 applies customer-requested processes to the encoded video stream, such as application of a watermark. The transcoder service 308 then generates multiple bit rate streams 309A-309N (collectively, "309") which are then input to a channel sink 310. The live stream feed may be configured as a series of frames having images produced at one bitrate. The bitrate is the rate at which bits are transmitted in a given period of time. The bitrate is also used to represent the quality of a video stream. The transcoder service 308 generates multiple live streams 309 where each live stream 309 is associated with a different bit rate.

The channel sink 310 creates programs from the live stream 309 which are then converted into a presentation manifest and fragments. The presentation manifest and fragments are stored in a container in cloud storage 316. One or more delivery services 312A - 312N (collectively, "312") interact with the cloud storage 316 and the channel sinks 310 to obtain a requested presentation manifest and fragment. The cloud storage 316 is a web-accessible storage repository where a request may take the form of a URL.

In one or more embodiments, the pre-processing service 304, the customization service 306, the transcoding service 308, the channel sink 310, and delivery service 312 may be implemented as one or more virtual machines. The virtual machines may be configured onto the same or different computing devices. However, it should be noted that the embodiments are not constrained to a particular configuration of the virtual machines onto one or more hardware units and/or computing devices.

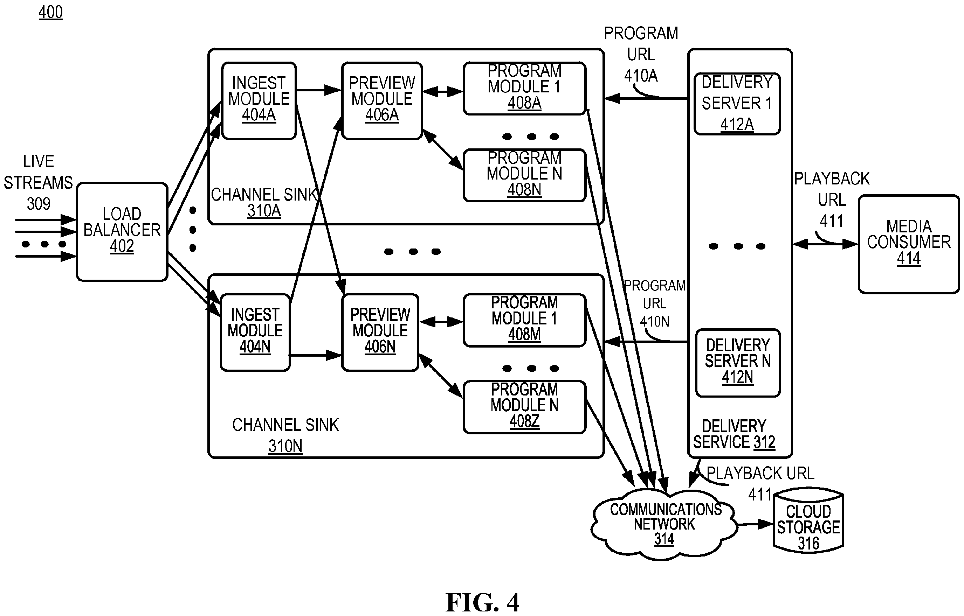

Fig. 4 illustrates the components of the channel sink 310 and delivery service 312 in further detail. A channel sink 310A - 310 N (collectively, "310") may include an ingest module 404A-404N (collectively, "404"), a preview module 406A-406N (collectively, "406"), and one or more program modules 408A - 408N, 408M - 408Z (collectively, "408"). A delivery service 312 may include one or more delivery servers 412A-412N (collectively, "412"). A load balancer 402 receives the multiple bit rate live streams 309 and distributes a subset of the streams 309 to each channel sink 310. Each ingest module 404 transmits the streams it receives to each preview module 406 in the channel. The structure of these components allows uninterrupted processing of the live event stream even in the case of partial or complete failure of the components of one or more virtual machines which are processing the same channel, as long as there is one virtual machine capable of processing. Also, the virtual machines may be allocated in different physical racks within a data center in order to prevent simultaneous failures.

Each preview module 406 receives the entire set of multiple bit rate streams which are then previewed by the content provider in real time. The preview module 406 enables the content provider to view the live stream and to adjust the settings of one or more of the services applied to the live stream, such as the pre-processing service 304, the customization service 306, and/or the transcoding service 308. For example, the content provider may wish to adjust a setting in the pre-processing service 308 to generate a different encoding that may generate a better quality presentation when used with a particular transcoder. The content provider may introduce a voice overlay to the presentation or incorporate subtitles into the presentation by applying additional technologies in the customization service 306.

A content provider starts one or more programs once the live content is ready to be published or started. When a program is published, a playback URL is generated so that the program may be viewed for live viewing. A program may be archived and available for viewing after the live event using the playback URL. If a program is not archived, then the playback URL is only valid during the duration of the live event and not available for on-demand viewing after the live event finishes.

A program module is created and started for each program that the content provider starts. There is a separate program module for each program. A program is a portion or region of the live stream feed that is captured and presented as a separate presentation. A content provider defines a program by specifying its viewing characteristics or attributes. For example, a content provider may define a program using the following exemplary attributes:
(i) program name and description;
(ii) the channel in which the live stream feed is received;
(iii) the estimated program duration;
(iv) the start and stop times;
(v) the DVR window length:
(vi) the program delay time;
(vii) archiving characteristics: whether archiving is enabled or disabled, and the archive location; and
(viii) publishing characteristics: whether the program is to be published or if the program is a recording, and published settings, such as, time availability and access restrictions.

Each program module 408 creates a program and the presentation manifest and fragments corresponding to a program. Each program module 408 stores the live presentation manifest and fragments into cloud storage 316. The program modules 408 also provide the presentation manifest and fragments when directly requested by a delivery server 412. The use of the multiple program modules 408 per channel allows the service to process several programs concurrently on the same channel. This allows content providers to publish programs with different characteristics based on the same live presentation. These characteristics include different delivery formats, recording window length and start and stop times.

In one or more embodiments, the ingest module 404, the preview module 406, and the program modules 408 may be a sequence of computer program instructions, that when executed by a processor, causes the processor to perform methods and/or operations in accordance with a prescribed task. Each module 404, 406, 408 may be implemented as program code, programs, procedures, module, code segments, program stacks, middleware, firmware, methods, routines, and so on. The executable computer program instructions may be implemented according to a predefined computer language, manner or syntax, for instructing a computer to perform a certain function. The instructions may be implemented using any suitable high-level, low-level, object-oriented, visual, compiled and/or interpreted programming language.

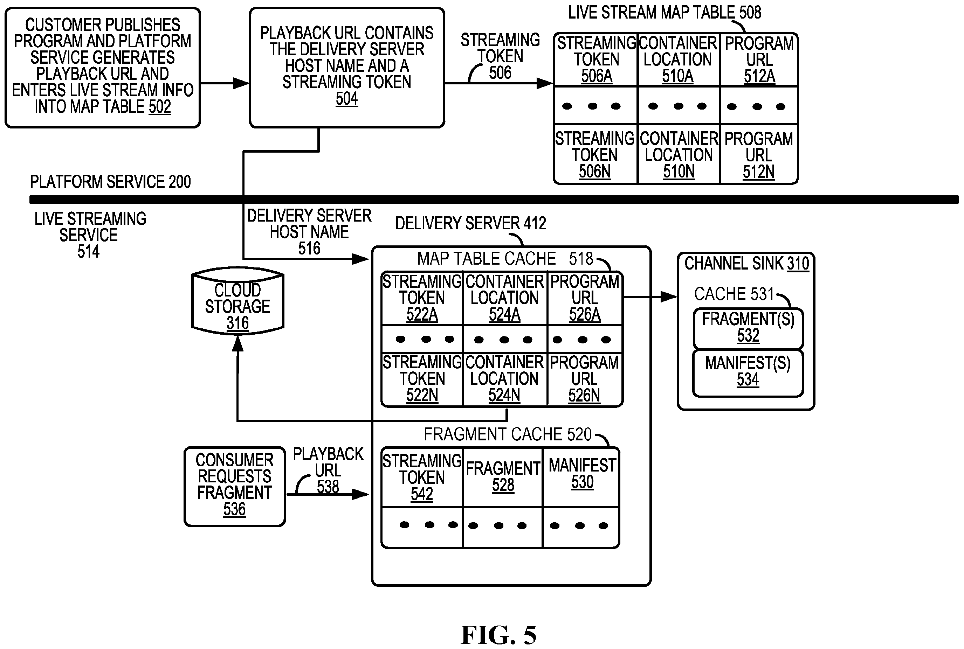

Fig. 5 is a block diagram illustrating the manner in which the fragments are tracked and stored in the live streaming service 514 and the platform service 200. The platform service 200 stores data pertaining to each live stream feed that is received in the data center. The platform service 200 utilizes this data in managing the resources of each data center.

When the content provider publishes a program, the platform service 200 generates a playback URL for the media consumers 114 to use in viewing a program (block 502). The playback URL may include the host name of a delivery server 516 and a streaming token 506 (block 504). The streaming token 506 uniquely identifies a live stream feed and is used as an index into a live stream map table 508 controlled by the platform service 200. The live stream map table 508 may include a number of entries, where each entry includes a streaming token 506A-506N (collectively, "506"), a container location 510A-510N (collectively, "510"), and a program URL 512A-512N (collectively, "512"). The container location 510 is a location of a cloud storage container that stores the presentation manifest and fragments. The program URL 512 specifies a location in the channel sink that temporarily stores a presentation manifest and fragments.

The lives streaming service 514 also contains data pertaining to location of the presentation manifest and fragments. A delivery server 412 may contain a map table cache 518 and a fragment cache 520. The map table cache 518 contains multiple entries where each entry includes a streaming token 522A-522N (collectively, "522"), a container location 524A-524N (collectively, "524"), and a program URL 526A-526N (collectively, "526"). The streaming token 522 is part of the playback URL and the delivery server 412 parses the playback URL to obtain the streaming token. The container location 524 is used to access the presentation manifest and fragments in cloud storage. The program URL 526A-526N (collectively, "526") is used to access the presentation manifest 534 and fragments 532 associated with a streaming token in a cache 531 in the channel sink 310. The entries in the map table cache 518 may be the most recently requested or the most requested.

The fragment cache 520 includes multiple entries where each entry is indexed by a streaming token 542. Each entry includes a streaming token 542, a fragment 528 and its corresponding manifest 530. The channel sink 310 may include a cache 531 where each program module 408 stores presentation manifests 534 and fragments 532 temporarily. The presentation manifest and fragments 532, 534 are accessible in the cache 531 through a program URL.

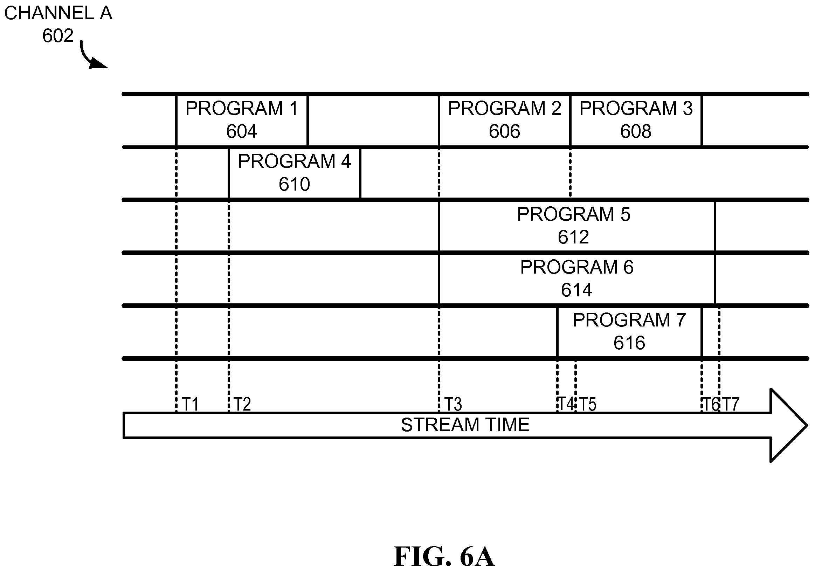

Fig. 6A illustrates exemplary program configurations. A content provider may configure a channel to process five programs from a live event. For example, the live event may be the 2012 London Olympics swimming events that take place on a particular day. Program 1, 604, may represent the women's preliminary 100 meter freestyle event, program 2, 606, may represent the women's 200 meter quarter-final backstroke event, program 3, 608, may represent the women's final 50 meter freestyle event, program 4, 610, may represent the women's semi-final 200 meter individual medley event, program 5, 612, may represent the women's preliminary 50 meter breaststroke event, and program 6, 614, may represent the men's preliminary 50 meter freestyle event.

A first program module is used to capture the live stream feed for program 1, 604, which starts at time point T1 and a second program module is used to capture the live stream feed for program 2, 606, which starts at time point T3. Since there is no overlap between the start times of programs 1 and 2, there is a gap between the start times. This gap allows a content provider to make adjustments to the encodings in real time or perform other adjustments to the pre-processing services of program 1 before it is distributed to the media consumers without impacting the capture of the live stream feed for program 2.

As shown in Fig. 6A, the start of program 4 overlaps during the presentation of program 1. In order to process the presentation of program 1 concurrently with program 4, program 1 is captured and processed by program module 1 while program 4 is captured and processed by program module 4.

In addition, programs 5 and 6 may run for the same program length but have different DVR settings. For example, program 5 may have a DVR window length of one hour and program 6 may have a DVR window length of ten minutes. For this scenario, there would be one program module to process program 5 and a separate program module to process program 6.

Program 7, 616, represents a mechanism for recording and storing the portion of program 6 that runs from time point T4 through time point T6. Program 7 may be used to capture a playback period for subsequent viewing.

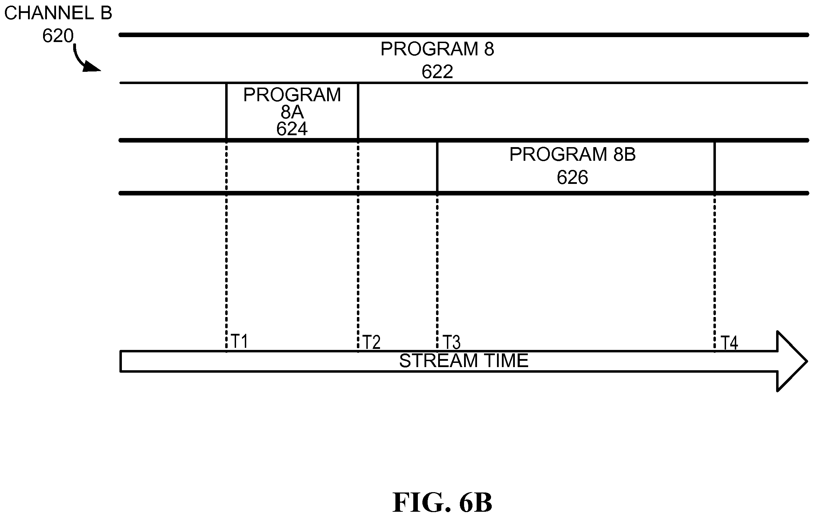

Fig. 6B represents another exemplary program configuration. In this configuration, program 8, 622, is a continuous live stream feed that does not start or stop. Program 8A, 624, is a program that captures the portion of program 8 from time point T1 to time point T2 and program 8B, 626, is a program that captures the portion of program 8 from time point T3 to time point T4. Programs 8A and 8B may be used to stream their respective portions to a playback device in real time or for on-demand viewing.

Attention now turns to a discussion of the live streaming processing and distribution that may be further described with reference to various exemplary methods. It may be appreciated that the representative methods do not necessarily have to be executed in the order presented, or in any particular order, unless otherwise indicated. Moreover, various activities described with respect to the methods can be executed in serial or parallel fashion, or any combination of serial and parallel operations. The methods can be implemented using one or more hardware elements and/or software elements of the described embodiments or alternative embodiments as desired for a given set of design and performance constraints. For example, the methods may be implemented as logic (e.g., computer program instructions) for execution by a logic device (e.g., a general-purpose or specific-purpose computer).

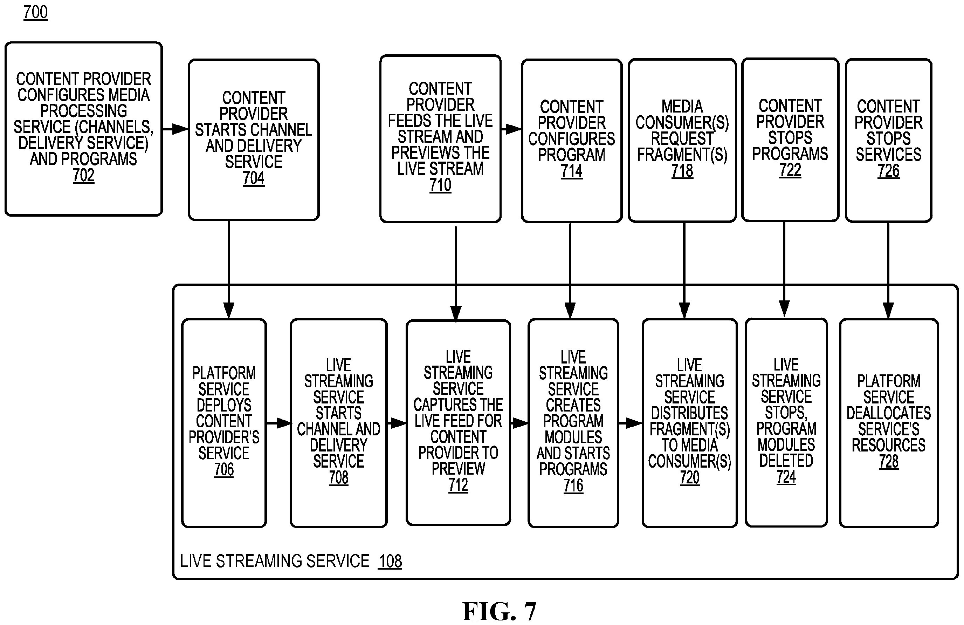

Fig. 7 illustrates an exemplary method 700 illustrating operations of the live streaming service 108. It should be noted that the method 700 may be representative of some or all of the operations executed by one or more embodiments described herein and that the method can include more or less operations than that which is described in Fig. 7.

A content provider 112 configures a service by specifying a number of channels and delivery services, and by providing information specifying the programs (block 702). The platform service 200 validates and stores this information. At a designated point in time, the content provider 112 may start the channel and service (block 704). The platform service 200 deploys the content provider's service in accordance with the requested configuration (block 706) thereby commencing the content provider's service to receive and deliver the live stream feeds (block 708).

The content provider feeds the live stream to the live streaming service (block 710) and the live streaming service captures the live stream feed in real time (block 712). The live streaming service allows the content provider to preview the live stream feed (block 712) and to adjust the live stream feed accordingly (block 714). At the time that the live event needs to be published to media consumers 114, the content provider 112 starts one or more programs according with its publishing needs (block 714). The live streaming service creates a number of program modules for processing each program and storing the presentation manifests and fragments associated with each program (block 716). Concurrently, with the processing of the live stream feed, a media consumer sends requests to the delivery service for a presentation manifest and fragments associated with the streamed live event (block 718). The live streaming service distributes the presentation manifest and fragments in response to the request (block 720). When the live events are over, the content provider 112 may stop the live programs and decide whether or not to make them available for seamless on-demand consumption through the same playback URL. When the content provider stops the programs (block 722), the live streaming service responds by stopping the corresponding program modules and deleting them (block 724). When the content provider stops the service (block 726), the platform service deallocates the channels and delivery services resources (block 728).

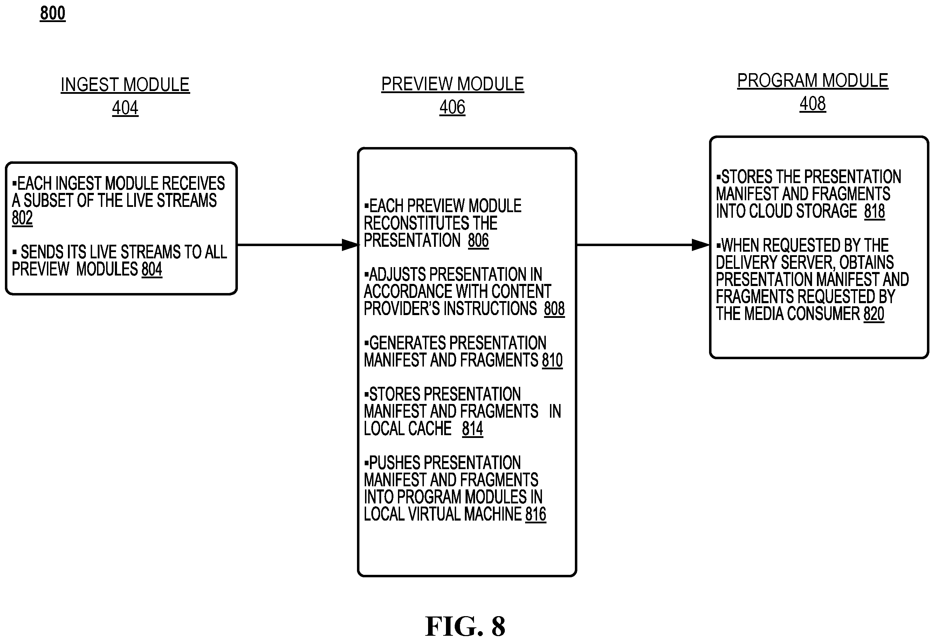

Fig. 8 illustrates another exemplary method 800 of the live streaming service in further detail. It should be noted that the method 800 may be representative of some or all of the operations executed by one or more embodiments described herein and that the method can include more or less operations than that which is described in Fig. 8.

Each ingest module 404 receives a subset of the multiple encodings of the live streams (block 802) and sends each subset of streams to each preview module in the channel (block 804). Each preview module 406 reconstitutes the presentation from each of the subsets it receives from each ingest module (block 806). The preview module 406 processes the presentation fragments (block 810) and creates a manifest corresponding to the complete presentation (block 812). The preview module 406 allows the content provider to preview or review the presentation and to make alterations to the settings of the pre-processing services (block 808). The presentation manifest and fragments are stored in a local cache of the channel (block 814) and the presentation manifest and fragments are pushed to a respective program module (block 816).

Each program module 408 constantly stores the presentation manifest and fragments into cloud storage (block 818) and provides the presentation manifest and fragments to the delivery server when requested. The program module 408 also stores temporarily the most current presentation manifest and fragments (block 820).

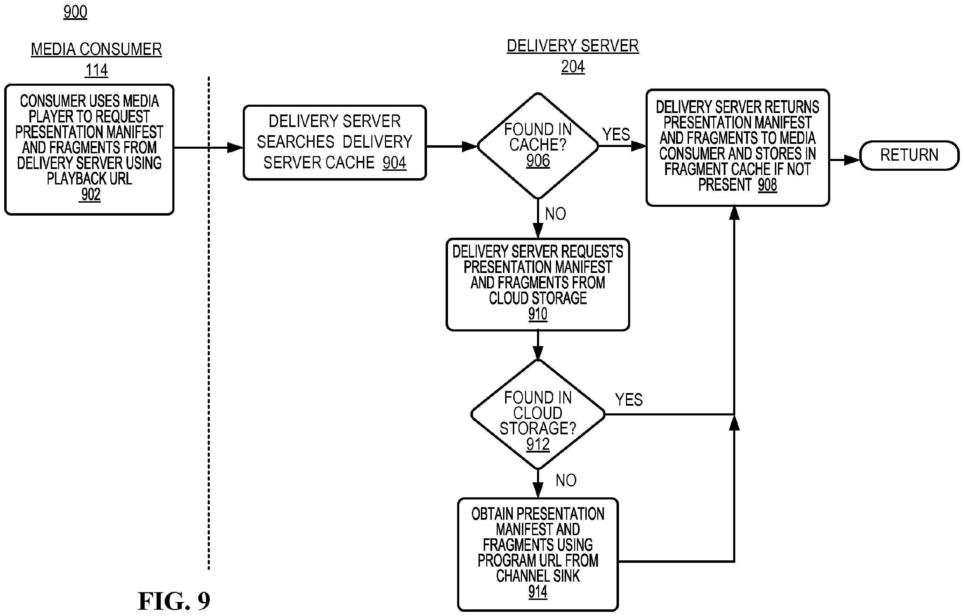

Fig. 9 illustrates an exemplary method 900 showing the delivery of the fragments requested by a media consumer. A media consumer uses a player operable on a computing device connected to the Internet to watch a live event streamed from the live streaming service. The player streams the live event from the live streaming service by making requests for the presentation manifest and fragments from the delivery service (block 902). The content provider provides the playback URL to the media consumer which includes the delivery server's host name and the streaming token that identifies the requested presentation manifest and fragments (block 902).

The delivery server searches for the presentation manifest and fragments, identified by the streaming token, in the delivery server's fragment cache (block 904). If the presentation manifest and fragments are found in the delivery server's fragment cache (block 906-yes), then the presentation manifest and fragments are returned to the media consumer (block 908). If not found in the delivery server's fragment cache (block 906-no), then the delivery server obtains the presentation manifest and fragments from cloud storage using the container location from the corresponding entry in the map table cache (block 910). If found in the container location in cloud storage (block 912-yes), then the presentation manifest and fragments are stored in the fragment cache and returned to the media consumer (block 908). Otherwise (block 912-no), the delivery server uses the program URL from the map table cache to obtain the presentation manifest and fragments from the channel sink (block 914) which transmits the presentation manifest and fragments to the media consumer and stores the presentation manifest and fragments in the fragment cache if not already present therein (block 908).

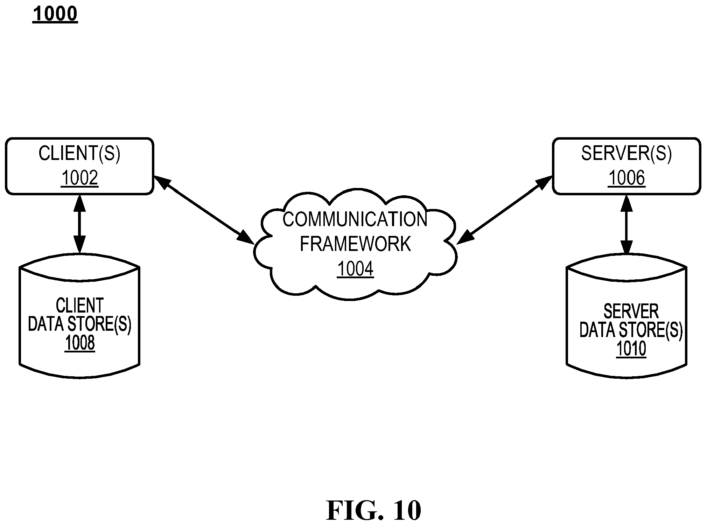

Attention now turns to a discussion of an exemplary operating environment. Referring now to Fig. 10, there is shown a schematic block diagram of an exemplary operating environment 1000. The embodiments may be applied to an operating environment 1000 having one or more servers 1006 communicatively coupled through a communication framework 1004 to one or more clients 1002. It should be noted that the operating environment 1000 is exemplary and is not intended to suggest any limitation as to the functionality of the embodiments.

Each server 1006 may be communicatively coupled to one or more server data stores 1010. A server 1006 may be embodied as a hardware device, a software module, or a combination thereof. The server 1006 may be any type of electronic device, such as, without limitation, a mobile device, a personal digital assistant, a mobile computing device, a tablet, a smart phone, a cellular telephone, a handheld computer, a server, a server array or server farm, a web server, a network server, a blade server, an Internet server, a work station, a mini-computer, a mainframe computer, a supercomputer, a network appliance, a web appliance, a distributed computing system, multiprocessor systems, or combination thereof. The server 1006 may also be embodied as a software module having instructions that execute in a single execution path, multiple concurrent execution paths (e.g., thread, process, etc.), or in any other manner.

Each client 1002 may be embodied as a hardware device, a software module, or a combination thereof. A client 1002 may be any type of electronic device, such as, without limitation, a mobile device, a personal digital assistant, a mobile computing device, a tablet, a smart phone, a cellular telephone, a handheld computer, a server, a server array or server farm, a web server, a network server, a blade server, an Internet server, a work station, a mini-computer, a mainframe computer, a supercomputer, a network appliance, a web appliance, a distributed computing system, multiprocessor systems, or combination thereof. A client 1002 may also be embodied as a software module having instructions that execute in a single execution path, multiple concurrent execution paths (e.g., thread, process, etc.), or in any other manner.

The communication framework 1004 facilitates communications between the servers and the clients. The communication framework 1004 may embody any well-known communication techniques, such as techniques suitable for use with packet-switched networks (e.g., public networks such as the Internet, private networks such as enterprise intranet, and so forth), circuit-switched networks (e.g., the public switched telephone network), or a combination of packet-switched networks and circuit-switched networks (with suitable gateways and translators).

Each server 1006 and client 1002 may include various types of standard communication elements designed to be interoperable with the communication framework 1004, such as one or more communications interfaces, network interfaces, network interface cards, radios, wireless transmitters/receivers, wired and/or wireless communication media, physical connectors, and so forth. Examples of wired communications media may include a wire, cable, metal leads, printed circuit boards, backplanes, switch fabrics, semiconductor material, twisted-pair wire, coaxial cable, fiber optics, a propagated signal, and so forth. Examples of wireless communications media may include acoustic, radio frequency spectrum, infrared, and other wireless media.

In one or more embodiments, the content providers 112 and media consumers 114 are clients of the live streaming service 108 and interact with the servers of the live streaming service. The content providers 112 and media consumers 114 may be implemented as any of the computing devices described above where the communication framework 1004 is an HTTP-based network, such as the Internet. In addition, the servers used to implement the channels and the delivery servers have a client-server relationship as well. Each channel and each delivery server may be implemented as any of the computing devices described above and interact with each other through a communication network, such as the Internet.

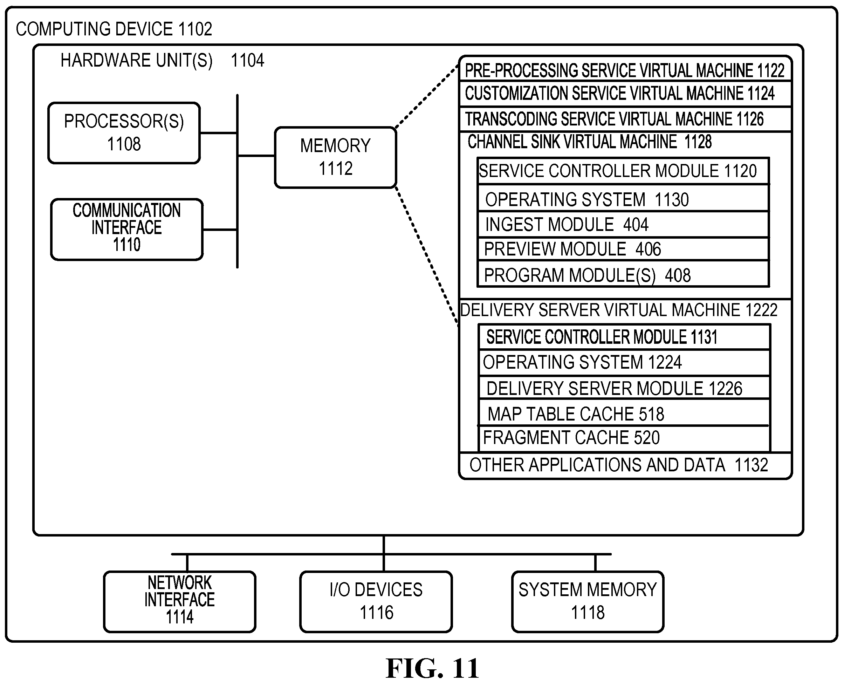

Fig. 11 illustrates an embodiment of an exemplary computing device 1102. In this configuration, the computing device 1102 may be configured as a server having one or more hardware units 1104, such as, without limitation a rack server, blade server, and the like. The computing device 1102 may also include a network interface 1114, I/O devices 1116, and a system memory 1118. The network interface 1114 provides wired or wireless communications between the hardware units 1104 and a communication framework. The system memory 1118 is used to stored programs and data used in operation of the computing device.

Each hardware unit 1104 may have at least one processor 1108, a communication interface 1100, and a memory 1112. A processor 1108 may be any commercially available processor and may include dual microprocessors and multi-processor architectures. The communication interface 1100 facilitates communications between the hardware unit 1104 and the network interface 1114, I/O devices 1116, and system memory 1118. The I/O devices 1116 may include a keyboard, mouse, pointing device, microphone, a sound input device, a touch input device, other devices to receive voice input, touch screen, devices to accept gesture input, printers, display, speakers, and the like.

The memory 1112 may be any type of computer-readable storage media or computer-readable storage device that stores executable procedures, applications, and data that does not pertain to propagated signals, such as modulated data signals transmitted through a carrier wave. The memory 1112 may be implemented as a memory device (e.g., random access memory, read-only memory, etc.), magnetic storage, volatile storage, nonvolatile storage, optical storage, DVD, CD, floppy disk drive, flash drive, and any combination thereof. The memory 1112 may also include one or more external storage devices or remotely located storage devices. The memory 1112 may contain instructions and data as follows:
- a pre-processing service virtual machine 1122 that performs the methods and operations of the pre-processing service 304;
- a customization service virtual machine 1124 that performs the methods and operations of the customization service 306;
- a transcoding service virtual machine 1126 that performs the methods and operations of the transcoding service 308;
- a channel sink virtual machine 1128, the performs the methods and operations of the channel sink 310, the channel sink virtual machine including a service controller module 1120 that coordinates the operations of each of the different modules within a virtual machine, an operating system 1130, an ingest module 404, a preview module 406, and one or more program modules 408;
- a delivery server virtual machine 1222, that performs the methods and operations of the delivery server 412, the delivery server virtual machine including a service controller module 1131 that coordinates the operations of each of the different modules within a virtual machine, an operating system 1224, a delivery server module 1226, a map table cache 518, a fragment cache 520; and
- various other applications and data 1132.

It should be noted that the embodiments are not constrained to the configuration of elements shown in Fig. 11 and that other configurations are intended. Any of the virtual machines may be configured to reside on one or more hardware units in one or more computing devices in any configuration.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A computer-implemented method for configuring a live streaming service (108, 512) with at least one channel (202, 303) and at least one delivery service (204, 312), the method comprising:
programming the at least one channel (202, 303) to start receiving a live stream feed (104, 302, 309) from a live broadcast through a first communications network (106) and to generate multiple programs (604, 606, 608, 610, 612, 614, 616, 622, 624) from the live stream feed (104, 302, 309) by a channel sink (310) being comprised by the at least one channel (202, 303), wherein a program is a portion of the live stream feed (104, 302, 309) that is published as a separate presentation and wherein the program is associated with viewing characteristics, the viewing characteristics comprising encoding settings, bit rates,
formatting, by the channel sink (310), at least one of the programs into a digital representation suitable for streaming to a media consumer's playback device, into a presentation manifest and fragments in real time, and storing the presentation manifest and the fragments of the at least one of the programs in a web-accessible remote data store (316) by a program module (408) being comprised by the channel sink (310), a media consumer being a client of the live streaming service (108, 512); and
using the delivery service (204, 312) to stream the presentation manifests and the fragments from the web-accessible remote data store through a second communications network (110), the channel associated with a first server, the delivery service (204, 312) associated with a second server (412), the first server and the second server being distinct (412); **characterized in that**:
prior to formatting, receiving the live stream feed (104, 302, 309) at a preview module (406) comprised by the channel sink (310), and providing a preview of the live stream feed (104, 302, 309) to a content provider (112), the content provider (112) being a client of the live streaming service (108, 512); and adjusting, by the content provider (112), settings of one or more services applied to the live stream feed (104, 302, 309) by at least one of adjust a setting in a pre-processing service (308) to generate different encoding that generates better quality presentation when used with a particular transcoder, introducing a voice overlay to the presentation, and incorporating subtitles into the presentation by applying additional technologies in a customization service (306).

2. The method of claim 1, further comprising:
receiving, at the delivery service (204, 312), a request to stream fragments of a program to a remote device; and
streaming the requested fragment from a local cache in the delivery service (204, 312).

3. The method of claim 1, further comprising:
receiving, at the delivery service (204, 312), a request to stream fragments of a program to a remote device; and
streaming the fragments from the web-accessible remote data store (316) when the fragments are not obtained from a local cache in the delivery service (204, 312).

4. The method of claim 1, further comprising:
receiving data to configure the live streaming service (108, 512) to process the live stream feed (104, 302, 309) into a plurality of programs with start and end times for a program.

5. A computer system with at least one channel server (202, 303) and at least one delivery service (204, 312) comprising:
a channel server having a plurality of channel sinks (310) and a local cache, the channel sink (310) being adapted to process a first live stream feed (104, 302, 309) concurrently into multiple programs (604, 606, 608, 610, 612, 614, 616, 622, 624), wherein a program is a portion of the live stream feed (104, 302, 309) that is published as a separate presentation and wherein the program is associated with viewing characteristics, the viewing characteristics comprising encoding settings, bit rates,
the channel sink (310) including at least one preview module (406) and a program module (408) for a program, each preview module (406) being adapted to receive the first live stream feed (104, 302, 309) which is formatted into a digital representation suitable for streaming to a media consumer's playback device, into a presentation manifest and fragments for a program, to store the presentation manifest and the fragments in the local cache, and to push the presentation manifest and the fragments to the program module (408);
the program module (408) being adapted to store the presentation manifest and the fragments into a web-accessible remote data store (316) and to retrieve requested fragments from the local cache in response to a request for the requested fragments; the delivery service (204, 312) being adapted to be used to stream the presentation manifests
and the fragments from the web-accessible remote data store through a second communications network (110), the channel associated with a first server, the delivery service (204, 312) associated with a second server (412), the first server and the second server being distinct (412);
**characterized in that**
the at least one preview module (406) being adapted, prior to format the first live stream feed (104, 302, 309), to provide a preview of the live stream feed (104, 302, 309) to a content
provider (112), the content provider (112) being a client of the live streaming service (108, 512); and a content provider (112) being adapted to adjust settings of one or more services applied to the live stream feed (104, 302, 309) by at least one of adjusting a setting in a pre-processing
service (308) to generate different encoding that generates better quality presentation when used with a particular transcoder, introducing a voice overlay to the presentation, and incorporating subtitles into the presentation by applying additional technologies in a customization service (306).

6. The computer system of claim 5, wherein the fragments stored in the local cache are accessed using a program universal resource locator.

7. The computer system of claim 5, further comprising:
a plurality of delivery servers (412), each delivery server (412) streaming one or more of the fragments to a playback device from a select one of the web-accessible remote data store (316), the local cache, or a delivery server cache.

8. The computer system of claim 5, wherein the first live stream feed (104, 302, 309) includes multiple bit rate streams.

## Patentansprüche

1. Ein computerimplementiertes Verfahren zum Konfigurieren eines Live-Stream-Diensts (108, 512) mit mindestens einem Kanal (202, 303) und mindestens einem Zustelldienst (204, 312), wobei das Verfahren umfasst:
Programmieren des mindestens einen Kanals (202, 303), um Empfangen einer Live-Stream-Zuführung (104, 302, 309) von einer Livesendung durch ein erstes Kommunikationsnetzwerk (106) zu starten und mehrere Programme (604, 606, 608, 610, 612, 614, 616, 622, 624) von der Live-Stream-Zuführung (104, 302, 309) durch eine Kanalsenke (310), die von dem mindestens einen Kanal (202, 303) umfasst wird, zu erzeugen, wobei ein Programm ein Teil der Live-Stream-Zuführung (104, 302, 309) ist, das als eine separate Präsentation veröffentlicht wird, und wobei das Programm mit Betrachtungscharakteristiken assoziiert ist, wobei die Betrachtungscharakteristiken Codierungsfestlegungen, Bitraten umfassen,
Formatieren mindestens eines der Programme durch die Kanalsenke (310) in eine digitale Darstellung zum Streamen zu einem Wiedergabegerät eines Medienkonsumenten, in ein Präsentationsmanifest und Fragmente in Echtzeit, und Speichern des Präsentationsmanifests und der Fragmente des mindestens einem der Programme in einem web-zugänglichen Remotedatenspeicher (316) durch ein Programmmodul (408), das von der Kanalsenke (310) umfasst wird, wobei ein Medienkonsument ein Client des Live-Stream-Diensts (108, 512) ist; und
Verwenden des Zustelldiensts (204, 312), um die Präsentationsmanifeste und die Fragmente von dem web-zugänglichen Remotedatenspeicher durch ein zweites Kommunikationsnetzwerk (110) zu streamen, wobei der Kanal mit einem ersten Server assoziiert ist, wobei der Zustelldienst (204, 312) mit einem zweiten Server (412) assoziiert ist, wobei der erste Server und der zweiter Server (412) verschieden sind,
**gekennzeichnet dadurch, dass**
vor dem Formatieren die Live-Stream-Zuführung (104, 302, 309) in einem Vorschaumodul (406) empfangen wird, das von der Kanalsenke (310) umfasst wird, und eine Vorschau der Live-Stream-Zuführung (104, 302, 309) an einen Inhaltslieferer (112) geliefert wird, wobei der Inhaltslieferer (112) ein Client des Live-Stream-Diensts (108, 512) ist; und durch den Inhaltslieferer (112) ein Anpassen von Festlegungen von einem oder mehreren Diensten, die auf die Live-Stream-Zuführung (104, 302, 309) angewandt werden, durch mindestens eines von erfolgt: Anpassen einer Festlegung in einem Vorbearbeitungsdienst (308), um verschiedene Codierungen zu erzeugen, die eine Präsentation besserer Qualität erzeugen, wenn sie mit einem besonderen Transkoder verwendet werden, Einfügen einer Sprachüberlagerung zu der Präsentation und Einfügen von Untertiteln in die Präsentation durch Anwenden zusätzlicher Technologien in einem Individualisierungsdienst (306).

2. Das Verfahren nach Anspruch 1, weiter umfassend:
Empfangen einer Anfrage in dem Zustelldienst (204, 312), Fragmente eines Programms zu einem Remotegerät zu streamen und
Streamen der angefragten Fragmente von einem lokalen Zwischenspeicher in dem Zustelldienst (204, 312).

3. Das Verfahren nach Anspruch 1, weiter umfassend:
Empfangen einer Anfrage in dem Zustelldienst (204, 312), Fragmente eines Programms zu einem Remotegerät zu streamen und
Streamen der Fragmente von dem web-zugänglichen Remotedatenspeicher (316), wenn die Fragmente nicht von einem lokalen Zwischenspeicher in dem Zustelldienst (204, 312) erhalten werden.

4. Das Verfahren nach Anspruch 1, weiter umfassend:
Empfangen von Daten, um den Live-Stream-Dienst (108, 512) zu konfigurieren, um die Live-Stream-Zuführung (104, 302, 309) in eine Vielzahl von Programme mit Start- und Endzeiten für ein Programm zu verarbeiten.

5. Ein Computersystem mit mindestens einem Kanalserver (202, 303) und mindestens einem Zustelldienst (204, 312), wobei das Computersystem umfasst:
einen Kanalserver mit einer Vielzahl von Kanalsenken (310) und einem lokalen Zwischenspeicher,
die Kanalsenke (310), die ausgelegt ist, eine erste Live-Stream-Zuführung (104, 302, 309) gleichzeitig in mehrere Programme (604, 606, 608, 610, 612, 614, 616, 622, 624) zu verarbeiten, wobei ein Programm ein Teil der Live-Stream-Zuführung (104, 302, 309) ist, das als eine separate Präsentation veröffentlicht wird, und wobei das Programm mit Betrachtungscharakteristiken assoziiert ist, wobei die Betrachtungscharakteristiken Codierungsfestlegungen, Bitraten umfassen,
wobei die Kanalsenke (310) mindestens ein Vorschaumodul (406) und ein Programmmodul (408) für ein Programm umfasst, wobei jedes Vorschaumodul (406) ausgelegt ist, die erste Live-Stream-Zuführung (104, 302, 309) zu empfangen, die in eine digitale Darstellung, die zum Streamen zu einem Wiedergabegerät eines Medienkonsumenten geeignet ist, in ein Präsentationsmanifest und Fragmente für ein Programm formatiert ist, und das Präsentationsmanifests und die Fragmente in dem lokalen Zwischenspeicher zu speichern und das Präsentationsmanifest und die Fragmente zu dem Programmmodul (408) zu schieben;
das Programmmodul (408), das ausgelegt ist, das Präsentationsmanifest und die Fragmente in einem web-zugänglichen Remotedatenspeicher (316) zu speichern und angefragte Fragmente von dem lokalen Zwischenspeicher in Antwort auf eine Anfrage für die angefragten Fragmente abzurufen;
den Zustelldienst (204, 312), der ausgelegt ist, verwendet zu werden, um die Präsentationsmanifeste und die Fragmente von dem web-zugänglichen Remotedatenspeicher durch ein zweites Kommunikationsnetzwerk (110) zu streamen, wobei der Kanal mit einem ersten Server assoziiert ist, wobei der Zustelldienst (204, 312) mit einem zweiten Server (412) assoziiert ist, wobei der erste Server und der zweite Server (412) verschieden sind;
**gekennzeichnet dadurch, dass**:
das mindestens eine Vorschaumodul (406) ausgelegt ist, vor Formatieren der ersten Live-Stream-Zuführung (104, 302, 309) eine Vorschau der Live-Stream-Zuführung (104, 302, 309) an einen Inhaltlieferer (112) zu liefern, wobei der Inhaltslieferer (112) ein Client des Live-Stream-Diensts (108, 512) ist; und ein Inhaltslieferer (112) ausgelegt ist, Festlegungen von einem oder mehreren Diensten anzupassen, die auf die Live-Stream-Zuführung (104, 302, 309) angewandt werden, durch mindestens eines von: Anpassen einer Festlegung in einem Vorbearbeitungsdienst (308), um verschiedene Codierungen zu erzeugen, die eine Präsentation besserer Qualität erzeugen, wenn sie mit einem besonderen Transkoder verwendet werden, Einfügen einer Sprachüberlagerung zu der Präsentation und Einfügen von Untertiteln in die Präsentation durch Anwenden zusätzlicher Technologien in einem Individualisierungsdienst (306).

6. Das Computersystem nach Anspruch 5, wobei auf die Fragmente, die in dem lokalen Zwischenspeicher gespeichert sind, unter Verwendung eines einheitlichen Ressourcenzeigers eines Programms (program universal resource locator) zugegriffen wird.

7. Das Computersystem nach Anspruch 5, weiter umfassend:
eine Vielzahl von Zustellservern (412), wobei jeder Zustellserver (412) ein oder mehrere der Fragmente zu einem Wiedergabegerät streamt, das von einem der Folgenden ausgewählt wurde: dem web-zugänglichen Remotedatenspeicher (316), dem lokalen Zwischenspeicher oder einem Zustelldienstzwischenspeicher.

8. Das Computersystem nach Anspruch 5, wobei die erste Live-Stream-Zuführung (104, 302, 309) mehrere Bitraten-Streams umfasst.

## Revendications

1. Procédé mis en oeuvre par ordinateur pour configurer un service de transmission en continu et en direct (108, 512) avec au moins un canal (202, 303) et au moins un service de distribution (204, 312), le procédé comprenant:
la programmation dudit au moins un canal (202, 303) pour commencer à recevoir une transmission en continu et en direct (104, 302, 309) à partir d'une diffusion en direct par l'intermédiaire d'un premier réseau de communication (106) et pour générer de multiples programmes (604, 606, 608, 610 , 612, 614, 616, 622, 624) à partir de la transmission en continu et en direct (104, 302, 309) par un récepteur de canal (310) étant constitué d'au moins un canal (202, 303), dans lequel un programme est une portion de la transmission en continu et en direct (104, 302, 309) qui est publiée en tant que présentation séparée et dans lequel le programme est associé à des caractéristiques de visualisation, les caractéristiques de visualisation comprenant des paramètres de codage, des débits binaires,
le formatage, par le récepteur de canal (310), d'au moins l'un des programmes pour obtenir une représentation numérique à la transmission en continu vers un l'appareil de lecture du consommateur de multimédia, dans un manifeste de présentation et des fragments en temps réel, et le stockage du manifeste la présentation et des fragments dudit au moins l'un des programmes dans un magasin (316) de données accessibles à distance sur le Web, par un module de programme (408) étant constitué par le récepteur de canal (310), un consommateur de multimédia étant un client du service de transmission en continu et en direct (108, 512) ; et
l'utilisation du service de distribution (204, 312) pour transmettre en continu les manifestes de présentation et les fragments à partir du magasin de données accessibles à distance sur le Web par le biais d'un second réseau de communication (110), le canal associé à un premier serveur, le service de distribution (204, 312) associé à un second serveur (412), le premier serveur et le second serveur étant distincts (412);
**caractérisé en ce que**:
avant le formatage, la réception de la transmission en continu et en direct (104, 302, 309) au niveau d'un module de prévisualisation (406) compris par le récepteur de canal (310) et la fourniture d'un aperçu de la transmission en continu et en direct (104, 302, 309) à un fournisseur de contenu (112), le fournisseur de contenu (112) étant un client du service de transmission en continu et en direct (108, 512); et le réglage, par le fournisseur de contenu (112), des paramètres d'un ou plusieurs services appliqués à la transmission en continu et en direct (104, 302, 309) par au moins l'une des opérations que sont le réglage d'un paramètre dans un service de prétraitement (308) pour générer différents codages et ainsi obtenir une présentation de meilleure qualité en cas d'utilisation avec un transcodeur particulier, l'introduction d'une superposition de voix à la présentation, et l'incorporant de sous-titres dans la présentation en recourant à des technologies supplémentaires dans un service de personnalisation (306).

2. Procédé selon la revendication 1, consistant en outre à:
recevoir, au niveau du service de distribution (204, 312), une requête pour diffuser des fragments d'un programme vers un dispositif à distance; et
transmettre en continu le fragment demandé depuis un cache local dans le service de distribution (204, 312).

3. Procédé selon la revendication 1, consistant en outre à:
recevoir, au niveau du service de distribution (204, 312), une requête pour diffuser des fragments d'un programme vers un dispositif à distance; et
transmettre en continu les fragments à partir du magasin (316) de données accessibles à distance sur le Web, lorsque les fragments ne sont pas obtenus à partir d'un cache local dans le service de distribution (204, 312).

4. Procédé selon la revendication 1, consistant en outre à:
recevoir des données pour configurer le service de transmission en continu et en direct (108, 512) pour traiter la transmission en continu et en direct (104, 302, 309) en une pluralité de programmes avec des heures de début et de fin pour un programme.

5. Système informatique pourvu au moins d'un serveur de canal (202, 303) et d'au moins un service de distribution (204, 312 comprenant:
un serveur de canaux ayant une pluralité de récepteur de canaux (310) et un cache local,
le récepteur de canal (310) étant adapté pour traiter une première transmission en continu et en direct (104, 302, 309) simultanément en plusieurs programmes (604, 606, 608, 610, 612, 614, 616, 622, 624), dans lequel un programme est une partie de la transmission en continu et en direct (104, 302, 309) qui est publiée en tant que présentation séparée et dans lequel le programme est associé à des caractéristiques de visualisation, les caractéristiques de visualisation comprenant des paramètres de codage, des débits binaires,
le récepteur de canal (310) comprenant au moins un module de prévisualisation (406) et un module de programme (408) pour un programme, chaque module de prévisualisation (406) étant adapté pour recevoir la première transmission en continu et en direct (104, 302, 309) qui est formaté dans une représentation numérique appropriée pour la transmission en continu à un dispositif de lecture du consommateur de multimédia, en un manifeste de présentation et des fragments d'un programme, pour stocker le manifeste de présentation et les fragments dans le cache local, et pour repousser le manifeste de présentation et les fragments au module de programme (408);
le module de programme (408) étant adapté pour stocker le manifeste de présentation et les fragments dans un magasin (316) de données accessibles à distance sur le Web et pour récupérer des fragments demandés à partir du cache local en réponse à une demande pour les fragments demandés;
le service de distribution (204, 312) étant adapté pour servir à la transmission en continu des manifestes de présentations et des fragments à partir du magasin de données accessibles à distance sur le Web à travers un second réseau de communication (110), le canal associé à un premier serveur, le service de distribution (204, 312) associé à un second serveur (412), le premier serveur et le second serveur étant distincts (412);
**caractérisé en ce que**:
ledit au moins un module de prévisualisation (406) étant adapté, préalablement au formatage de la première transmission en continu et en direct (104, 302, 309) pour fournir un aperçu de la transmission en continu et en direct (104, 302, 309) à un fournisseur de contenu (112), le fournisseur de contenu (112) étant un client du service de transmission en continu et en direct (108, 512); et un fournisseur de contenu (112) adapté pour régler les paramètres d'un ou plusieurs services appliqués de la transmission en continu et en direct (104, 302, 309) par au moins le réglage d'un paramètre dans un service de prétraitement (308) pour générer différents codages et ainsi obtenir une présentation de meilleure qualité en cas d'utilisation avec un transcodeur particulier, l'introduction d' une superposition de voix à la présentation, et l'incorporant de sous-titres dans la présentation en recourant à des technologies supplémentaires dans un service de personnalisation (306).

6. Système informatique selon la revendication 5, dans lequel les fragments stockés dans le cache local sont accédés en utilisant un localisateur de ressources universel de programme.

7. Système informatique selon la revendication 5, comprenant en outre:
une pluralité de serveurs de distribution (412), chaque serveur de distribution (412) transmettant en continu un ou plusieurs des fragments à un dispositif de lecture à partir d'un magasin de données à distance (316) accessibles par le Web, le cache local, ou un cache de serveur de distribution.

8. Système informatique selon la revendication 5, dans lequel la première transmission en continu et en direct (104, 302, 309) comprend de multiples flux de débit binaire.
